(19)

Europäisches
Patentamt
European
Patent Office
Office européen
des brevets

(11) **EP 2 860 904 A1**

(12) **EUROPEAN PATENT APPLICATION**

(43) Date of publication:
**15.04.2015 Bulletin 2015/16**

(51) Int Cl.:
*H04L 9/00* (2006.01)     *H04L 9/32* (2006.01)

(21) Application number: **13306390.9**

(22) Date of filing: **08.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
- **Joye, Marc**
  **35576 Cesson-Sévigné (FR)**
- **Libert, Benoit**
  **35576 Cesson-Sévigné (FR)**

(74) Representative: **Perrot, Sébastien**
**Technicolor R&D France Snc**
**975, avenue des Champs Blancs**
**CS 17616**
**35576 Cesson-Sévigné Cedex (FR)**

(54) **Method for signing a set of binary elements, and updating such signature, corresponding electronic device and computer program product**

(57)     In one embodiment, it is proposed a method for signing a set of binary element comprising n elements, where n is a natural number, by an electronic device. Such method is remarkable in that it outputs a signature associated to said set, that can be derived by the use of the public key when one or several new elements are added to said set.

FIG.2c

EP 2 860 904 A1

# EP 2 860 904 A1

**Description**

<u>Field of the invention</u>

The invention relates to cryptography, and more specifically, to homomorphic signature schemes.

<u>Background of the invention</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art. In this section, a focus on e-voting context is used in order to present some issues. However, one skilled in the art could transpose to other contexts in which similar issues occur (e.g. when authenticating sets are used).

In e-voting context, some issues related to the storage of ballots are tackled in the article entitled *"Cryptographic Methods for storing ballots on a voting machine"* by J. Bethencourt et al., published in the proceedings of the conference Network and Distributed System Security Symposium (NDSS) 2007. More precisely, it is proposed a primitive, called an History-Hiding Append-Only Signatures (HH-AOS), that can be viewed as a special case of an homomorphic signatures that allows one to sign a set of messages (e.g. a set of ballots) in such a way that anyone can subsequently derive a signature on arbitrary supersets of the original set (e.g. when a vote is added to a set of ballots). This primitive was shown to provide subliminal-free storage mechanisms for ballots in e-voting systems. Indeed, in order to prevent anyone from injecting subliminal information (e.g. by embedding this information in derived signatures), it is required that derived signatures be indistinguishable from original signatures on the resulting superset. The article of Bethencourt et al. mentions two instantiations of such primitive. However, the first one is a generic construction, based on any signature, where the public key has linear size in the maximal size of sets to be signed, and it requires that the signer determines an upper bound on the cardinality of sets when generating his key pair. Moreover, this construction is not free of subliminal channels: the reason is that it allows the party running the signature derivation algorithm to choose certain values pseudo-randomly (rather than truly randomly), which allows a distinguisher to infer some information on the derivation history of signatures. Hence, only the second construction is a subliminal-free HH-AOS.

However, only such second construction is proved unforgeable under the Diffie-Hellman assumption in the random oracle model. But, a security proof in the random oracle model is considered as heuristic arguments rather than real mathematical proof, due to the fact that, when a real instantiation is done (i.e. when the random oracle in the construction is substitute with a hash function (such as the SHA-3)) some issue can occur. For example, in the article entitled *"The Random Oracle Methodology, Revisited",* by R. Canetti et al., published in the proceedings of the conference STOC'98, it was showed that a signature scheme can have a security proof in the random oracle model but no secure instantiation with a concrete hash function.

Hence, there is a need to obtain a subliminal-free HH-AOS with a security proof in the standard model instead of a security proof in the random oracle model. In the state of the art no such subliminal-free HH-AOS with a security proof in the standard model is known.

One skilled in the art, trying to obtain such subliminal-free HH-AOS with a security proof in the standard model, would have consulted the article entitled *"Computing on Authenticated data: New Privacy Definitions and Constructions"* by N. Attrapadung et al., published in the proceedings of the conference Asiacrypt 2012. Indeed, such article proposes, especially the section 5, a dual technique of an HH-AOS, that has a security proof in the standard model (such technique is dual in the sense that a signature allows one to publicly derive a signature on a subset (rather than a superset) of an initial set). However, it does not seem obvious for one skilled in the art to adapt such dual technique in order to obtain an HH-AOS with a security proof in the standard model.

The present invention overcomes such issue.

<u>Summary of the invention</u>

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present invention is directed to a method for signing a set of binary element comprising n elements, where n is a natural number, by an electronic device. Such method is remarkable in that it comprises:

- a step of obtaining a one-time key pair comprising a private key corresponding to a random natural number, and a public key corresponding to an element of a group raised to the power of said random integer;
- a step of signing said public key with a structure-preserving signature method, delivering a first signature ;
- a step of obtaining a first commitment on said public key, a second commitment on said first signature and a first non-interactive witness proof that said public key and said first signature verify equations of the structure preserving signature;
- a step of obtaining a decomposition of said private key into a sum of n random integer, each random integer been associated to only one element of said set;
- a step of signing each element in said set in function of a programmable hash function and a random integer which is associated to it, delivering, for each element in said set, a second signature comprising at least a first and a second elements, a combination of all of said second elements being linked to said public key;
- a step of obtaining a third commitment on said first element, and a fourth commitment on said second element, for each second signature;
- a step of obtaining a second non-interactive witness proof that a relationship exists between said first element and said second element;
- a step of obtaining a third non-interactive witness proof that asserts that said combination of all of said second elements is being linked to said public key holds;
- a step of outputting a signature of said set of binary element comprising said first, second commitments, said first non-interactive witness proof, said third non-interactive witness proof, and for each binary element of said set, said third, fourth commitments and said second non-interactive witness proof.

Such method is remarkable in that it outputs a signature associated to said set, that can be derived by the use of the public key (and not the private key) when one or several new elements are added to said set.

In a preferred embodiment, the method for signing is remarkable in that said first, second, third and fourth commitments are Groth-Sahai commitments.

In a preferred embodiment, the method for signing is remarkable in that said programmable hash function is a Waters hash function.

In a preferred embodiment, the method for signing is remarkable in that said random natural number $x$ is comprised between zero and a prime number $p$, and said public key corresponds to $X = g^x$, where $g$ is said element of said group.

In a preferred embodiment, the method for signing is remarkable in that said step of signing each element comprises:

- a step of obtaining said at least first element by determining a value $\sigma_{i,1} = H_{\mathbb{G}}(m_i)^{\omega_i}$, where $H_{\mathbb{G}}$ is said programmable hash function, $m_i$ is an element of said set of binary element, and $\omega_i$ is said random integer associated to said element $m_i$;
- a step of obtaining said at least second element by determining a value $\sigma_{i,2} = g^{\omega_i}$; and in that said combination corresponds to a product of all the n values $\sigma_{i,2}$ that is equal to said public key.

In a preferred embodiment, the method for signing is remarkable in that said relationship between said first element $\sigma_{i,1}$ and said second element $\sigma_{i,2}$ is the following one: $e(\sigma_{i,1}, g) = e(H_{\mathbb{G}}(m_i), \sigma_{i,2})$.

In a preferred embodiment, the present invention is directed to a method for updating, by an electronic device, a signature of a set of binary element comprising n elements, where n is a natural number. Such method is remarkable in that it comprises:

- a step of verifying that said signature of said set of binary element comprises a first and a second commitment, a first non-interactive witness proof, a third non-interactive witness proof, and for each binary element of said set, a third and a fourth commitments and a second non-interactive witness proof;
- a step of adding $k$ binary elements to said set, where $k$ is a natural number, delivering an updated set of binary elements comprising $n + k$ elements that are different from each other;
- a step of obtaining $n + k$ random integer, each random integer been associated to only one element of said set, and a sum of said $n + k$ random integer being equal to zero ;
- a step of modifying for each binary element of said set, said third and said fourth commitments in function of a random integer associated to a binary element;
- a step of determining for each of the $k$ binary added elements, a first signature comprising at least a first and a second element in function of a programmable hash function and a random integer which is associated to it;

- a step of determining for each first signature a fifth commitment on said at least a first element, a sixth commitment on said at least a second element, and a fourth non-interactive witness proof that a relationship exists between said first element and said second element, said fifth and sixth commitments corresponding to said third and fourth commitments for said $k$ additional elements, and said fourth non-interactive witness proof corresponding to said second non-interactive witness proof for said $k$ additional elements;
- a step of updating said third non-interactive witness proof;
- a step of re-randomizing commitments and proofs.

Such method enables to publicly (i.e. without using the private key) derive a signature on any superset of a signed set. Such method is history-hiding in that each derived signature leaks no information about its derivation history. The proposed method is the first one to provide this history-hiding property while being validated by a security proof in the standard model of computation (rather than a heuristic model).

In a preferred embodiment, such method for updating is remarkable in that all commitments are Groth-Sahai commitments.

In a preferred embodiment, such method for updating is remarkable in that said programmable hash function is a Waters hash function.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory")* or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more subprograms of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

In another embodiment, the present invention relates to an electronic device comprising means for signing a set of binary element comprising n elements, where n is a natural number. Said means for signing being remarkable in that they comprise:

- means for obtaining a one-time key pair comprising a private key corresponding to a random natural number, and a public key corresponding to an element of a group raised to the power of said random integer;
- means for signing said public key with a structure-preserving signature means, delivering a first signature ;
- means for obtaining a first commitment on said public key, a second commitment on said first signature and a first non-interactive witness proof that said public key and said first signature verify equations of the structure preserving signature;

- means for obtaining a decomposition of said private key into a sum of n random integer, each random integer been associated to only one element of said set;
- means for signing each element in said set in function of a programmable hash function and a random integer which is associated to it, delivering, for each element in said set, a second signature comprising at least a first and a second elements, a combination of all of said second elements being linked to said public key;
- means for obtaining a third commitment on said first element, and a fourth commitment on said second element, for each second signature;
- means for obtaining a second non-interactive witness proof that a relationship exists between said first element and said second element;
- means for obtaining a third non-interactive witness proof that asserts that said combination of all of said second elements is being linked to said public key holds;
- means for outputting a signature of said set of binary element comprising said first, second commitments, said first non-interactive witness proof, said third non-interactive witness proof, and for each binary element of said set, said third, fourth commitments and said second non-interactive witness proof.

In another embodiment, such electronic device is remarkable in that said first, second, third and fourth commitments are Groth-Sahai commitments.

In another embodiment, such electronic device is remarkable in that said programmable hash function is a Waters hash function.

In another embodiment, the present invention relates to an electronic device comprising means for updating a signature of a set of binary element comprising n elements, where n is a natural number, said means for updating being characterized in that they comprise:

- means for verifying that said signature of said set of binary element comprises a first and a second commitment, a first non-interactive witness proof, a third non-interactive witness proof, and for each binary element of said set, a third and a fourth commitments and a second non-interactive witness proof;
- means for adding $k$ binary elements to said set, where k is a natural number, delivering an updated set of binary elements comprising n + k elements that are different from each other;
- means for obtaining $n + k$ random integer, each random integer been associated to only one element of said set, and a sum of said $n + k$ random integer being equal to zero ;
- means for modifying for each binary element of said set, said third and said fourth commitments in function of a random integer associated to a binary element;
- means for determining for each of the $k$ binary added elements, a first signature comprising at least a first and a second element in function of a programmable hash function and a random integer which is associated to it;
- means for determining for each first signature a fifth commitment on said at least a first element, a sixth commitment on said at least a second element, and a fourth non-interactive witness proof that a relationship exists between said first element and said second element, said fifth and sixth commitments corresponding to said third and fourth commitments for said $k$ additional elements, and said fourth non-interactive witness proof corresponding to said second non-interactive witness proof for said $k$ additional elements;
- means for updating said third non-interactive witness proof;
- means for re-randomizing commitments and proofs.

In another embodiment, such electronic device is remarkable in that all commitments are are Groth-Sahai commitments.

Brief description of the figures

The above and other aspects of the invention will become more apparent by the following detailed description of exemplary embodiments thereof with reference to the attached drawings in which:

- Figure 1 illustrates the scope of one embodiment of the present invention;
- Figures 2(a)-(d) present the main functions of a signature scheme according to one embodiment of the invention;
- Figures 3(a)-(d) present the main functions of a signature scheme according to a second embodiment of the invention;
- Figure 4 presents a device that can be used to perform one or several steps of methods disclosed in the present document.

Detailed description

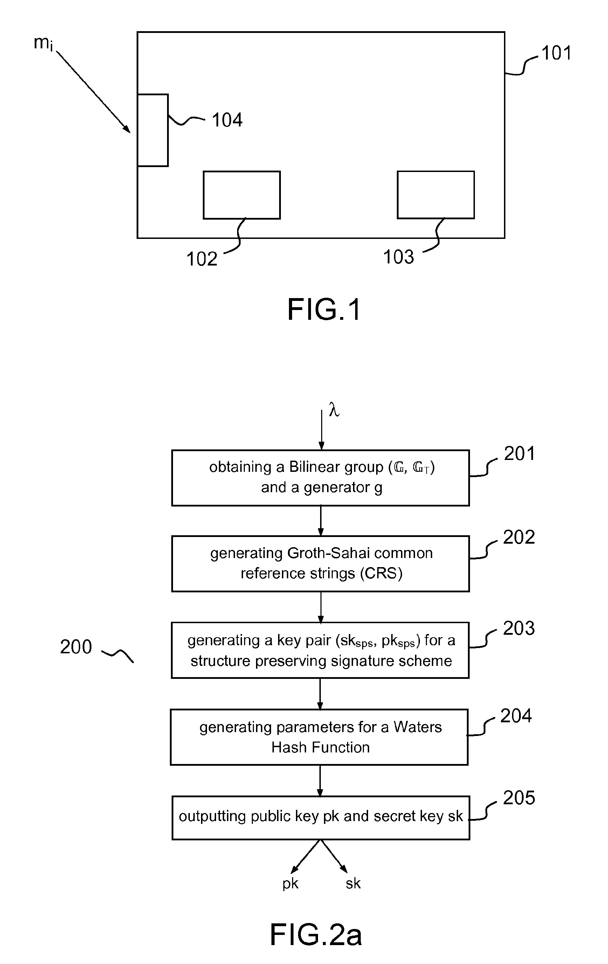

Figure 1 illustrates the scope of one embodiment of the present invention.

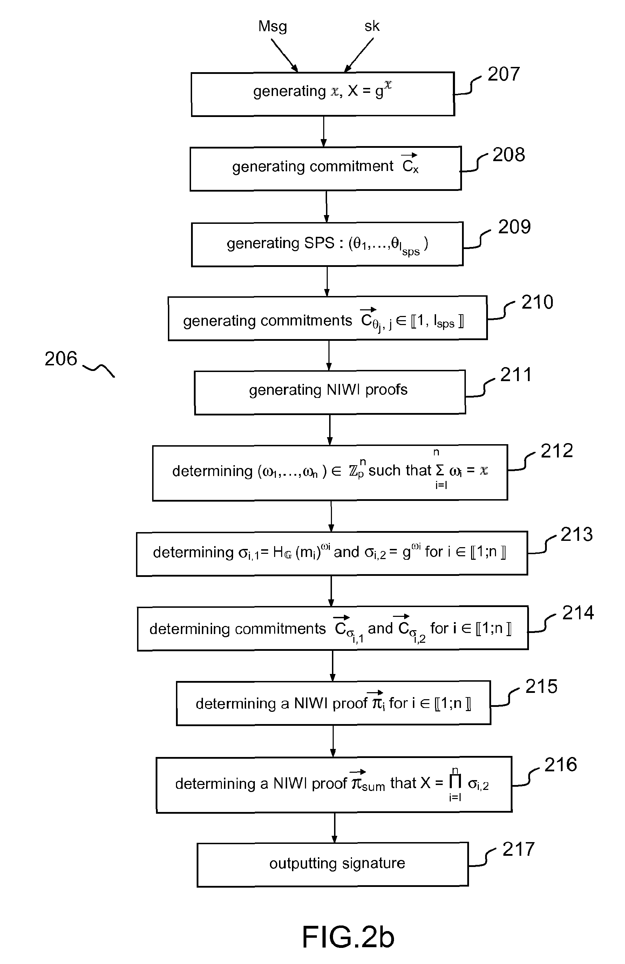

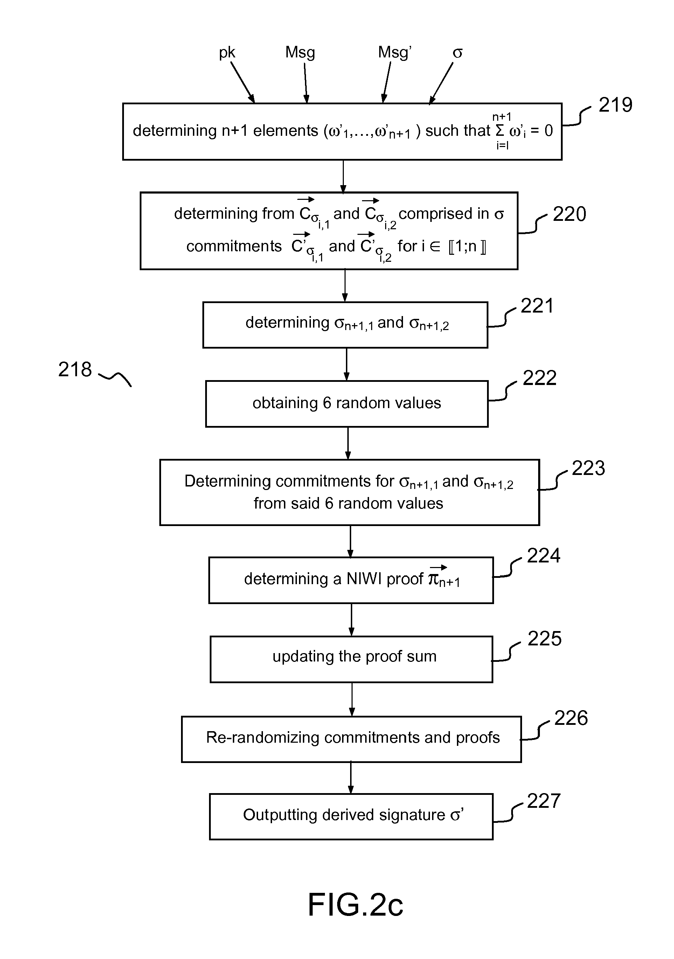

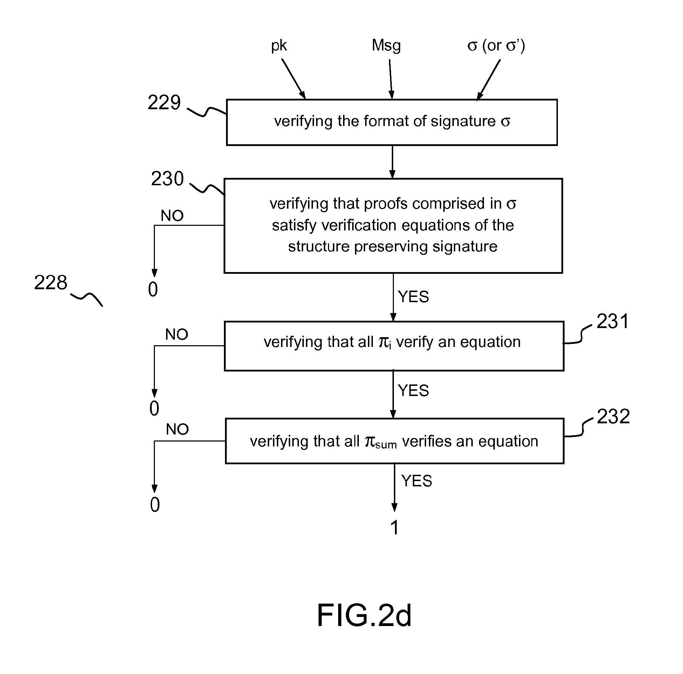

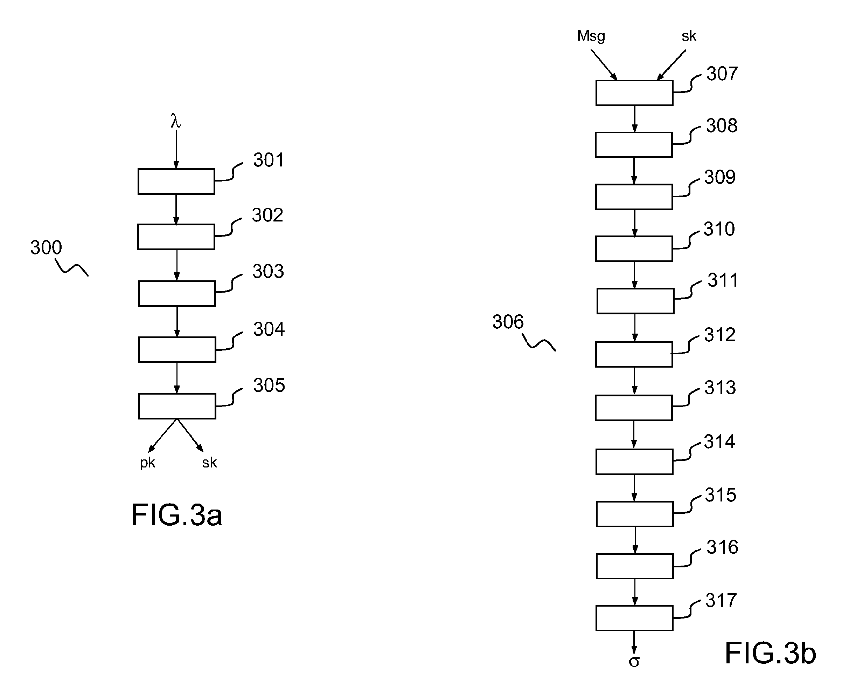

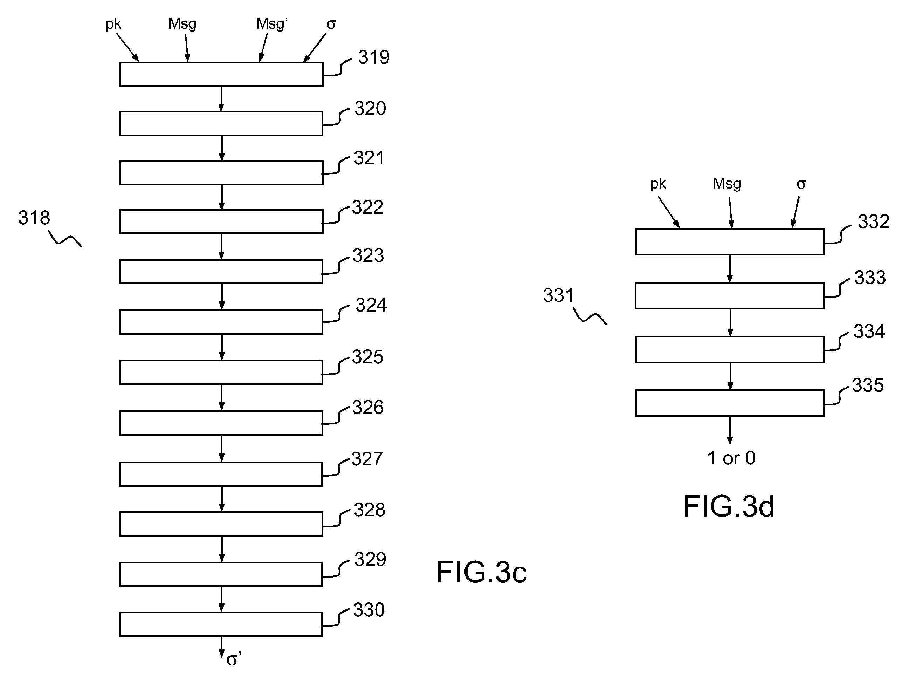

In such embodiment, an electronic device, referenced 101, and comprising a random generator unit, referenced 102, as well as memory unit, referenced 103, is able to store ballots. In order to manage the storage and the privacy of ballots during an electronic election, the electronic device 101 should be initiated as follow: it received from a trusted entity, a signed set via input/output means referenced 104. In one embodiment, the received set comprises at least one message. Such at least one message being a message corresponding to a "start" message (for example the such message $m_1 = 0$), and the received signature was determined according to one of the signature method described in the Figures 2 or 3, via the use of a private key. The received message and the received signature are then stored into the memory unit 103. That this set and the associated signature that are going to be updated during an electronic vote. Indeed, when a voter has been identified and allowed to enter his vote (e.g. a message) via for example authentication means or via access control means, He votes on the electronic device 101. The electronic device 101 received in input a message $m'$ that can be for example $m' = r \parallel vote$, where r is a random value of 64 bits, and *vote* corresponds to the value of the vote. Then, the electronic device 101 checks if such message $m'$ already belongs to the stored set of ballots. In case that such message $m'$ does not belong to such stored set, the electronic device adds to such set the received message (in that case for example $m_2 := m'$), and update the signature (without having a private key) associated to the modified set, that is still stored on the memory unit 103. In order to proceed to such update of signature, the electronic device 101 implements a signature derivation method as described in the Figure 2 and 3. When n voters have successfully voted, the electronic device 101 stores, in the memory unit 103, the following set $\{m_i\}_{i=1}^{n}$ as well as the associated signature. Let's remark that in another embodiment, several messages can be added at the same time (without having to iterate several time the derivation signature method).

The proposed signature technique that enables to obtain such kind of derivability of a signature is still compliant with the requirements of unforgeability, context hiding properties and prevent the occurrence of subliminal information. For reminders, the unforgeability captures the idea that if an attacker is given various derived signatures (perhaps iteratively derived) on messages of his choice, He should be unable to produce a signature on a message that is not derivable from the set of signed messages at his possession. The Context hiding requirement captures an important privacy property: a signature should reveal nothing more than the message being signed. In particular, if a signature on a message m' was derived from a signature on $m$, the derived signature should be statistically indistinguishable from a fresh signature on m', even if the original signature on $m$ is revealed. This implies that an attacker should not learn anything about m other than what can be inferred from $m'$. This should be true even if the original signature on $m$ is revealed.

Figures 2(a)-(d) and Figures 3(a)-(d) present respectively two embodiments of the present invention. These embodiments rely on the following features. It can be viewed as a non-obvious combination of some features described:

- in the article *"Computing on Authenticated Data: New Privacy Definitions and Constructions"* by Attrapadung et al., published in the proceedings of the conference Asiacrypt 12, (which is exactly the dual primitive of the one considered in the present invention with the same privacy properties);

- in the article *"Unbounded HIBE and Attribute-Based Encryption"* "by A. Lewko and B. Waters, published in the proceedings of the conference Eurocrypt 2011. Indeed, the signature derivation algorithm of the present invention implicitly transforms an $n$ -out-of- $n$ additive secret sharing into a $(n + 1)$ -out-of-$(n + 1)$ additive sharing of the same secret. This transformation actually takes place in the exponent as the shares themselves are not directly available to the derivation algorithm. In the article of Lewko and B. Waters, a similar technique in the key delegation algorithm of their HIBE scheme is used. However, the present technique departs from the one described in such article in that the construction relies on the partitioning paradigm (i.e., the reduction is unable to sign certain messages that are used to solve a hard problem in the reduction). The reason is that, as pointed out in the article *"Computing on Authenticated Data: New Privacy Definitions and Constructions"* previously mentioned, these techniques make it harder to construct completely context-hiding schemes due to the existence of two or more distinct distributions of valid-looking signatures; and

- in the article *"Efficient Identity-Based Encryption Without Random Oracles"* by B. Waters, published in the proceedings of the conference Eurocrypt 2005. Indeed, the present technique also relies on the programmability properties of the Waters hash function. For reminders, a programmable hash function is a number-theoretic hash function that emulates the behavior of random oracles in the standard model. As defined in the article *"Programmable Hash Functions and Their Applications"* by D. Hofheinz and E. Kiltz., and published in the proceedings of the conference Crypto 08, a programmable hash function maps a binary message $m$ to a group element in such a way that the discrete logarithm of the hash value $H_{\mathbb{G}}(m) \in \mathbb{G}$ (where $\mathbb{G}$ is a group) may be available or not with certain easy-to-assess probabilities. The number theoretic hash function described in the article *"Efficient Identity-Based*

*Encryption Without Random Oracles"* maps a *L* -bit string *m* = *m*[1] ... *m[L]* to the product $H_{\mathbb{G}}(m) = h_0 . \prod_{i=1}^{L} h_i^{m[i]}$ for uniformly distributed public group elements $(h_0, ..., h_L) \in_R \mathbb{G}^{L+1}$. For any $m \in \{0,1\}^L$, it is possible to relate $H_{\mathbb{G}}(m)$ to exponents $a_m, b_m \in \mathbb{Z}_p$ such that $H_{\mathbb{G}}(m) = g^{a_m} h^{b_m}$. As defined in the previously mentioned article *"Programmable Hash Functions and Their Applications"*, a (*m*, *n*)-programmable hash function is a group hash function such that, for all $X_1,...,X_m$", $\in \{0,1\}^L, Z_1,...,Z_n \in \{0,1\}^L$, with $X_i \neq Z_j$ the probability to have $b_{X_1} = \cdots = b_{X_m} = 0$ and $b_{X_1} \neq 0 \wedge ... \wedge b_{X_m} \neq 0$ is non-negligible. In the article *"Efficient Identity-Based Encryption Without Random Oracles"*, it was implicitly proved that Waters' hash function is (1, *q*)-programmable with probability $O(\frac{1}{q} . (L + 1))$. If the Waters hash function is used to instantiate the Boneh-Lynn-Shacham signatures described in the aticle *"Short Signatures from the Weil Pairing"* by D. Boneh et al., and published in the proceedings of the conference Asiacrypt 2001 (for which a signature on m consists of $H_{\mathbb{G}}(m)^{sk}$, where *sk* is the private key), this allows to prove its one-time unforgeability (i.e., its security in a game where the adversary is only allowed one signing query) in the standard model: the adversary's unique signing query m is answered by computing $H_{\mathbb{G}}(m)^{sk} = (g^{sk})^{a_m}$ from the public key $g^{sk}$ if $b_m$ = 0. If the adversary forges a signature on a message $m^*$ for which $b_{m^*} \neq 0$, the reduction can extract $h^{sk}$ and thereby solve a Diffie-Hellman instance.

The idea of the present technique is to sign each set $Msg = \{m_i\}_{i=1}^{n}$ by generating a fresh one-time key pair $(sk, pk) = (x, g^x) \in \mathbb{Z}_p \times \mathbb{G}$ for a BLS-type signature. The one-time public key $X = g^x$ is then certified using the long-term key pair of a structure-preserving signature scheme. Finally, the set $Msg = \{m_i\}_{i=1}^{n}$ is signed by choosing $\varpi_1, ..., \varpi_n \xleftarrow{R} \mathbb{Z}_p$ such that $\sum_{i=1}^{n} \varpi_i = x$ and generating pairs $(\sigma_{i,1}, \sigma_{i,2}) = (H_{\mathbb{G}}(m_i)^{\varpi_i}, g^{\varpi_i})$ so that the verifier will have to check that $\prod_{i=1}^{n} \sigma_{i,2} = X$ and $e(\sigma_{i,1}, g) = e(H_{\mathbb{G}}(m_i), \sigma_{i,2})$ for each *i*. By doing so, anyone will be able to publicly add new elements to the set by transforming the sharing $\{\varpi_i\}_{i=1}^{n}$ of *x* into a new sharing $\{\varpi_i'\}_{i=1}^{n+1}$ of the same value. At the same time, as implied by the security proof, it is computationally infeasible to publicly remove elements from the signed set.

To guarantee the full context-hiding security of the scheme, we do not let pairs $(\sigma_{i,1}, \sigma_{i,2})$ appear in clear but replace them by perfectly-hiding Groth-Sahai commitments to $(\sigma_{i,1}, \sigma_{i,2})$ along with non-interactive witness indistinguishable (NIWI) proofs that committed values satisfy the appropriate relations (here, "witness indistinguishable" means that the proof leaks no information about which witnesses were used to generate them when several witnesses satisfy the proven relation).

The construction also makes use of structure-preserving signature schemes (as defined in the article "Structure-Preserving Signatures and Commitments to Group elements", by M. Abe, G. Fuchsbauer, J. Groth, K. Haralambiev, M. Ohkubo, in the proceedings of Crypto 2010, pp. 209-236). These are signature schemes where messages and public keys all consist of elements of an abelian group over which a bilinear map is efficiently computable. Specifically, a structure-preserving signature is used to certify a new one-time public key $X = g^x$ when a new set is signed. To this end, the structure-preserving signature only has to be secure against random message attacks, where the adversary only obtains signatures on random messages that it has no control on.

Figures 2(a)-(d) present the main functions of a signature scheme according to one embodiment of the invention.

In the notations below, for any element h $\in \mathbb{G}$ and any vector $\vec{g} = (g_1, g_2, g_3) \in \mathbb{G}^3$, $E(h, \vec{g})$ stands for the vector $(e(h, g_1), e(h, g_2), e(h, g_3)) \in \mathbb{G}_T^3$.

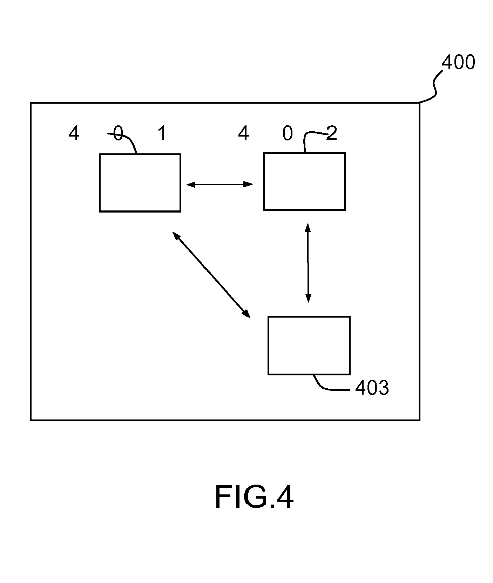

Figure 2(a) presents a generation method noted Keygen($\lambda$), referenced 200, that can be executed by a device as the one depicted in the Figure 1 and Figure 4. Such generation method comprises:

- a step, referenced 201, of obtaining a bilinear group $(\mathbb{G}, \mathbb{G}_T)$ of prime order $p > 2^\lambda$, with a generator $g$ randomly chosen in the group $\mathbb{G}$ ;

- a step, referenced 202, of generating a Groth-Sahai CRS f = $(\vec{f_1}, \vec{f_2}, \vec{f_3})$ for the perfect witness indistinguishability setting, namely $\vec{f_1}$ = $(f_1,1,g)$, $\vec{f_2}$ = $(1,f_2,g)$ and $\vec{f_3}=\vec{f_1}^{\xi_1}.\vec{f_2}^{\xi_2}.(11,g)^{-1}$ , with randomly chosen elements $f_1$ and $f_2$ in the group $\mathbb{G}$, and values $\xi_1$ and $\xi_2$, randomly chosen values in $\mathbb{Z}_p$;

- a step, referenced 203, of generating a key pair ($sk_{sps}$, $pk_{sps}$) for a structure-preserving signature scheme in order to sign messages consisting of a single group element. We denote by $l_{sps}$ and $v_{sps}$ the number of group elements per signature and the number of verification equations, respectively in this structure-preserving signature scheme;

- a step, referenced 204, of generating parameters for a Waters hash function. Such step of generating comprises :

  o a step of obtaining $L + 1$ random values ($h_0$, $h_1$, ..., $h_L$) where each element $h_i$ belongs to the group $\mathbb{G}$ ;

  o a step of defining a function $H_{\mathbb{G}} : \{0,1\}^L \to \mathbb{G}$, such that for any $L$-bit string $m = m[1] ... m[L] \in \{0,1\}^L$, we have $H_{\mathbb{G}}(m) = h_0. \prod_{i=1}^{L} h_i^{m[i]}$ . In another embodiment, the message $m$ is not decomposed in a base 2 as previously, but in a base than is strictly greater than 2. In that case, a different Waters hash function, as the one disclosed in the article "Trading Time for Space: Towards an Efficient IBE Scheme with Short(er) Public Parameters in the Standard Model" by S. Chatterjee et al., published in the proceedings of the conference ICISC 2005 or in the article "Secure and Practical Identity-Based Encryption" by D. Naccache, published on the Cryptology ePrint Archive Report 2005/369, is used. In another embodiment, another programmable hash function, that is based on the cover-free families, can be used (as the one depicted in the article : "Short Signatures from Weaker Assumption" by D. Hofheinz et al., published in the proceedings of the conference Asiacrypt 2011). Let's remark that all the deterministic programmable hash function can be used in such technique. These remarks can also be applied to the embodiment described in the figure 3;

  - a step, referenced 205, of outputting a public key $pk$ which is defined as follows :

  $$pk = ( (\mathbb{G}, \mathbb{G}_T), g, \boldsymbol{f}, pk_{sps}, \{h_i\}_{i=0}^{L}),$$ and outputting a private key $sk$ defined as follows : $sk = sk_{sps}$. The public key defines $\Sigma$ = $\{0,1\}^L$.

In such embodiment, a Waters hash function $H_{\mathbb{G}}$ is used. But, in another embodiment, another programmable hash function can be used.

Figure 2(b) presents a signature method noted Sign*(sk,Msg)*, referenced 206, that can be executed by a device as the one depicted in the Figure 1 and Figure 4. Such signature method 206 takes on input a set of message $Msg = \{m_i\}_{i=1}^{n}$, where $m_i \in \{0,1\}^L$ for each $i$, and the private key $sk = sk_{sps}$. Such signature method comprises:

- a step, referenced 207, of generating a fresh one-time public key $X = g^x$, with an element x which is chosen randomly in the group $\mathbb{Z}_p$ ;

- a step, referenced 208 of generating Groth-Sahai commitments $\vec{C}_X$ = $(11,X)\vec{f_1}^{r_X}.\vec{f_2}^{s_X}.\vec{f_3}^{t_X}$ with the elements $r_X$, $s_X$ and $t_X$ that are random values belonging to the group $\mathbb{Z}_p$;

- a step, referenced 209, of generating a structure-preserving signature $\left(\theta_1, ..., \theta_{l_{sps}}\right) \in \mathbb{G}^{l_{sps}}$ on the group element $\mathbb{G}$ ;

- a step, referenced 210 of generating Groth-Sahai commitments $\vec{C}_{\theta_j}=(1,1,\theta_j).\vec{f_1}^{r_{\theta_j}}.\vec{f_2}^{s_{\theta_j}}.\vec{f_3}^{t_{\theta_j}}$ for $j \in \{1, ...,l_{sps}\}$;

- a step, referenced 211, of generating NIWI proofs $\left\{\vec{\pi}_{sps,j}\right\}_{j=1}^{v_{sps}}$ that committed variables $\left(X, \{\theta_j\}_{j=1}^{l_{sps}}\right)$ satisfy the verification equations of the structure-preserving signature;

- a step, referenced 212, of determining n elements of the group $\mathbb{Z}_p$ , $(\omega_1,...,\omega_n)$, satisfying the following constraint:

$$\sum_{i=1}^{n} \omega_i = x;$$

- a step, referenced 213 of determining for all the $i \in \{1,...,n\}$ the followings values: $\sigma_{i,1} = H_{\mathbb{G}}(m_i)^{\omega i}$ and $\sigma_{i,2} = g^{\omega i}$, where the messages are indexed in some pre-determined lexicographical order;

- a step, referenced 214, of determining commitments of said values $\sigma_{i,1}$ and $\sigma_{i,2}$ as follows: $\vec{C}_{\sigma_{i,1}} = (1,1,\sigma_{i,1}).\vec{f_1}^{r_{i,1}}.\vec{f_2}^{s_{i,1}}.\vec{f_3}^{t_{i,1}}$ and $\vec{C}_{\sigma_{i,2}} = (1,1,\sigma_{i,2}).\vec{f_1}^{r_{i,2}}.\vec{f_2}^{s_{i,2}}.\vec{f_3}^{t_{i,2}}$, for all the elements $\sigma_{i,1}$ and $\sigma_{i,2}$ that belong to the set $\left\{\sigma_{i,1},\sigma_{i,2}\right\}_{i=1}^{n}$;

- a step, referenced 215, of generating for all $i \in \{1,...,n\}$, a NIWI proof $\vec{\pi_i}$ proving that the elements $\sigma_{i,1}$ and $\sigma_{i,2}$ satisfy the equation $e(\sigma_{i,1}, g) = e(H_{\mathbb{G}}(m_i), \sigma_{i,2})$. Such proof $\vec{\pi_i}$ is obtained by performing the followings computations :
$$\vec{\pi}_i = \left(\pi_{i,1}, \pi_{i,2}, \pi_{i,3}\right) = (g^{r_{i,1}}.H_{\mathbb{G}}(m_i)^{-r_{i,2}}, g^{s_{i,1}}.H_{\mathbb{G}}(m_i)^{-s_{i,2}}, g^{t_{i,1}}.H_{\mathbb{G}}(m_i)^{-t_{i,2}}),$$
and satisfying the following equation:
$$E\left(g, \vec{C}_{\sigma_{i,1}}\right) = E\left(H_{\mathbb{G}}(m_i), \vec{C}_{\sigma_{i,2}}\right).E\left(\pi_{i,1}, \vec{f_1}\right).E\left(\pi_{i,2}, \vec{f_2}\right).E\left(\pi_{i,3}, \vec{f_3}\right);$$

- A step, referenced 216, of determining a NIWI proof $\vec{\pi}_{sum}$ that $X = \prod_{i=1}^{n} \sigma_{i,2}$. Such proof is obtained by performing the following computations: $\vec{\pi}_{sum} = \left(\pi_{s,1}, \pi_{s,2}, \pi_{s,3}\right) = (g^{r_X - \sum_{i=1}^{n} r_{i,2}}, g^{s_X - \sum_{i=1}^{n} s_{i,2}}, g^{t_X - \sum_{i=1}^{n} t_{i,2}})$, which satisfies the equation
$$E\left(g, \vec{C}_X.\prod_{i=1}^{n} \vec{C}_{\sigma_{i,1}}^{-1}\right) = E\left(\pi_{s,1}, \vec{f_1}\right).E\left(\pi_{s,2}, \vec{f_2}\right).E\left(\pi_{s,3}, \vec{f_3}\right);$$

- A step, referenced 217, of outputting the signature $\sigma$ associated to the set of messages $Msg = \{m_i\}_{i=1}^{n}$ defined as:
$$\sigma = (\vec{C}_X, \left\{\vec{C}_{\theta_j}\right\}_{j=1}^{l_{sps}}, \left\{\vec{\pi}_{sps,j}\right\}_{j=1}^{v_{sps}}, \left\{(m_i, \vec{C}_{\sigma_{i,1}}, \vec{C}_{\sigma_{i,2}}, \vec{\pi}_i)\right\}_{i=1}^{n}, \vec{\pi}_{sum}).$$

In such embodiment, the messages $m_i$ are comprised within the signature $\sigma$. In another embodiment, the messages $m_i$ are not comprised within the signature $\sigma$. However, in such case, a correspondence table (stored in a memory unit) or a simple pre-determined lexicographical order enables to link each message $m_i$ with the corresponding elements $\vec{C}_{\sigma_{i,1}}, \vec{C}_{\sigma_{i,2}}, \vec{\pi}_i$.

In one embodiment, the structure preserving signature generated in the step 209 can be obtained by using the technique described in the article "Signing on Elements in Bilinear Groups for Modular Protocol Design" by M. Abe et al., and published in the Cryptology ePrint Archive, or the technique described in the article "Structure-Preserving Signatures and Commitments to Group Elements" by M. Abe et al., and published in the proceedings of the conference Crypto 2010.

In another embodiment, the step 212 comprises a step of decomposing x into n parts via the use of the Shamir's Secret Sharing technique (published in the article "How to Share a Secret", by A. Shamir, Communications of the ACM, 22(11), p. 612-613, 1979). Indeed, the secret key x can be shared in a *n-out-of-n* fashion through such technique in such a way that homomorphic polynomial manipulations can be used to turn a n-out-of-n sharing into a (n+1)-out-of-(n+1) sharing of the same secret without knowing this secret. This was done in Section 6 of the article : "Attribute-Based Encryption for Fine-Grained Access Control of Encrypted Data" by V. Goyal et al., published in the Cryptology ePrint Archive (Report 2006/309). Then one skilled in the art would modify the step 213 accordingly. These remarks can also be applied to the embodiment described in the figure 3. Figure 2(c) presents a derivation signature method noted SignDerive(*pk, Msg, Msg', σ*), referenced 218, that can be executed by a device as the one depicted in the Figure 1 and Figure 4. Such derivation signature method 218 takes in input a set of messages $Msg = \{m_i\}_{i=1}^{n}$ comprising n messages, and another set of messages $Msg' = \{m_i\}_{i=1}^{n} \cup \{m'\}$ for some $m' \in \Sigma$. In the case that the set *Msg'* has not such format, the derivation signature method outputs a symbol $\perp$ that indicates that it is not possible to derive a signature. Such derivation signature method comprises:

- a step, referenced 219, of determining $n + 1$ elements $(\omega'_1,...,\omega'_{n+1})$, chosen randomly in the group $\mathbb{Z}_p$ with the constraint that $\sum_{i=1}^{n+1} \omega'_i = 0$;

- a step, referenced 220, of determining for all the $i \in \{1,...,n\}$ the followings values: $\vec{C}'_{\sigma_{i,1}} = \left(1,1,H_{\mathbb{G}}(m_i)^{\omega'_i}\right).\vec{C}_{\sigma_{i,1}}$ and $\vec{C}'_{\sigma_{i,2}} = (1,1,g^{\omega'_i}).\vec{C}_{\sigma_{i,2}}$. It should be noticed that the proof $\vec{\pi}_i = (\pi_{i,1},\pi_{i,2},\pi_{i,3})$ still satisfies the equation $E\left(g,\vec{C}'_{\sigma_{i,1}}\right) = E\left(H_{\mathbb{G}}(m_i),\vec{C}'_{\sigma_{i,2}}\right).E\left(\pi_{i,1},\vec{f_1}\right).E\left(\pi_{i,2},\vec{f_2}\right).E\left(\pi_{i,3},\vec{f_3}\right)$, because it only depends on the randomness of commitments and not on the committed values;

- a step, referenced 221, of determining $\sigma_{n+1,1}$ and $\sigma_{n+1,2}$ such that $H_{\mathbb{G}}(m')^{\omega'_{n+1}}$ and $\sigma_{n+1,2} = g^{\omega'_{n+1}}$;

- a step, referenced 222, of obtaining random values $r_{n+1,1}$, $r_{n+1,2}$, $s_{n+1,1}$, $s_{n+1,2}$, $t_{n+1,1}$, $t_{n+1,2}$ in the group $\mathbb{Z}_p$ ;
- a step, referenced 223 of determining commitments of $\sigma_{n+1,1}$ and $\sigma_{n+1,2}$ : $\vec{C}_{\sigma_{n+1,1}} = (1,1\sigma_{n+1,1}).\vec{f_1}^{r_{n+1,1}}.\vec{f_2}^{s_{n+1,1}}.\vec{f_3}^{t_{n+1,1}}$ and $\vec{C}_{\sigma_{n+1,2}} = (1,1,\sigma_{n+1,2}).\vec{f_1}^{r_{n+1,2}}.\vec{f_2}^{s_{n+1,2}}.\vec{f_3}^{t_{n+1,2}}$;

- a step, referenced 224, of determining NIWI proof $\vec{\pi}_{n+1} = \left(\pi_{n+1,1},\pi_{n+1,2},\pi_{n+1,3}\right) = (g^{r_{n+1,1}}.H_{\mathbb{G}}(m')^{-r_{n+1,2}}, g^{s_{n+1,1}}.H_{\mathbb{G}}(m')^{-s_{n+1,2}}, g^{t_{n+1,1}}.H_{\mathbb{G}}(m')^{-t_{n+1,2}})$, for certifying that the following equality stands : $e\left(\sigma_{n+1,1},g\right) = e(H_{\mathbb{G}}(m'),\sigma_{n+1,2})$;

- A step, referenced 225, of updating the proof sum by determining $\vec{\pi}'_{sum} = (\pi'_{s,1},\pi'_{s,2},\pi'_{s,3}) = (\pi_{s,1}.g^{-r_{n+1,2}}, \pi_{s,2}.g^{-s_{n+1,2}}, \pi_{s,2}.g^{-t_{n+1,2}})$;

- a step, referenced 226, of re-randomizing the commitments $\vec{C}_X, \left\{\vec{C}'_{\sigma_{i,1}}, \vec{C}'_{\sigma_{i,2}}\right\}_{i=1}^{n+1}$ and $\left\{\vec{C}_{\theta_j}\right\}_{j=1}^{l_{sps}}$, and the proofs $\left\{\vec{\pi}_{sps,j}\right\}_{j=1}^{v_{sps}}, \{\vec{\pi}_i\}_{i=1}^{n}$ and $\vec{\pi}_{sum}$, delivering the following rerandomizing elements $\vec{C}''_X, \left\{\vec{C}''_{\sigma_{i,1}}, \vec{C}''_{\sigma_{i,2}}\right\}_{i=1}^{n+1}$ and $\left\{\vec{C}''_{\theta_j}\right\}_{j=1}^{l_{sps}}$ , and the proofs $\left\{\vec{\pi}''_{sps,j}\right\}_{j=1}^{v_{sps}}, \{\vec{\pi}''_i\}_{i=1}^{n}$ and $\vec{\pi}''_{sum}$. In such step, in all of these commitments and proofs, the underlying exponents have been updated;
- a step, referenced 227, of outputting a derived signature $\sigma'$ defined as follows: $\sigma' = (\vec{C}''_X, \left\{\vec{C}''_{\theta_j}\right\}_{j=1}^{l_{sps}}, \left\{\vec{\pi}''_{sps,j}\right\}_{j=1}^{v_{sps}}, \left\{(m_i,\vec{C}''_{\sigma_{i,1}}, \vec{C}''_{\sigma_{i,2}}, \vec{\pi}''_i)\right\}_{i=1}^{n+1}, \vec{\pi}''_{sum})$ after having re-organized the indexation of $\left\{(m_i,\vec{C}''_{\sigma_{i,1}}, \vec{C}''_{\sigma_{i,2}}, \vec{\pi}''_i)\right\}_{i=1}^{n+1}$ according to the predetermined lexicographical order for $\{m_i\}_{i=1}^{n+1}$.

In another embodiment, the step 219 comprises a step of decomposing the value 0 into n + 1 parts via the use of the Shamir's Secret Sharing technique in the same way as the technique already mentioned in the case of the decomposition of the secret key *x* can be divided into n part. Then one skilled in the art would modify the step 220 accordingly. These remarks can also be applied to the embodiment described in the figure 3.

Figure 2(d) presents a verification signature method noted Verify(*pk, Msg, σ*), referenced 227, that can be executed by a device as the one depicted in the Figure 1 and Figure 4. Such verification signature method 228 takes in input a given public key *pk*, and a set of messages $Msg = \{m_i\}_{i=1}^{n}$, with $m_i \in \Sigma = \{0,1\}^L$, and a signature $\sigma$. Such

verification signature method comprises:

- a step, referenced 229, of verify the format of the signature $\sigma$ (e.g if $\sigma$ can be expressed as follows :

$$\sigma = (\vec{C}_X, \left\{\vec{C}_{\theta_j}\right\}_{j=1}^{l_{sps}}, \left\{\vec{\pi}_{sps,1}\right\}_{j=1}^{v_{sps}}, \left\{(m_i, \vec{C}_{\sigma_{i,1}}, \vec{C}_{\sigma_{i,2}}, \vec{\pi}_i)\right\}_{i=1}^{n}, \vec{\pi}_{sum});$$

- a step, referenced 230, of verifying if the proofs $\left\{\vec{\pi}_{sps,1}\right\}_{j=1}^{v_{sps}}$ comprised in the signature $\sigma$ satisfy the verification equations of the structure preserving signature. In the case that the proofs $\left\{\vec{\pi}_{sps,1}\right\}_{j=1}^{v_{sps}}$ do not satisfy such equations, the step delivers an output value equals to zero;
- a step, referenced 231, of determining if there is at least one element $i \in \{1, ...,n\}$ such that the proof $\vec{\pi}_i$ does not verify the equation $E(g, \vec{C}_{\sigma_i,1}i) = E(H_{\mathbb{G}}(m_i), \vec{C}_{\sigma_i,2}) \cdot E(\pi_{i,1}, \vec{f_1}) \cdot E(\pi_{i,2}, \vec{f_2}) \cdot E(\pi_{i,3}, \vec{f_3})$. In the case that such element i exists, the step delivers an output value equals to zero;
- a step, referenced 232, of determining if the element $\vec{\pi}_{sum}$ does not satisfy the equation

$$E\left(g, \vec{C}_X \cdot \prod_{i=1}^{n} \vec{C}_{\sigma_i,1}^{-1}\right) = E\left(\pi_{s,1}, \vec{f_1}\right) \cdot E\left(\pi_{s,2}, \vec{f_2}\right) \cdot E\left(\pi_{s,3}, \vec{f_3}\right).$$ In element $\vec{\pi}_{sum}$ does not satisfy the equation, the step delivers an output value equals to zero;

- In the case that one of the previously step has delivered an output value equals to zero, the verification signature method indicates that the signature is not valid. Otherwise, it indicates that the signature is valid.

In such embodiment, the elements $\{m_i\}_{i=1}^{n}$ are comprised in the signature so as to simplify the verifier's task and help him to determine the signature components associated with each element of *Msg* when checking the equation :

$$E\left(g, \vec{C}_{\sigma_i,1}\right) = E\left(H_{\mathbb{G}}(m_i), \vec{C}_{\sigma_i,2}\right) \cdot E\left(\pi_{i,1}, \vec{f_1}\right) \cdot E\left(\pi_{i,2}, \vec{f_2}\right) \cdot E\left(\pi_{i,3}, \vec{f_3}\right).$$

As in the article *"Cryptographic Methods for storing ballots on a voting machine"* previously mentioned, one can finalize the set and prevent any further insertions by adding a special message.

Figures 3(a)-(d) present the main functions of a signature scheme according to one embodiment of the invention.

In the notations below, as previously mentioned, for any element $h \in \mathbb{G}$ and any vector $\vec{g} = (g_1, g_2, g_3) \in \mathbb{G}^3$, $E(h, \vec{g})$ stands for the vector $(e(h, g_1), e(h, g_2), e(h, g_3)) \in \mathbb{G}_T^3$.

Figure 3(a) presents a generation method noted Keygen($\lambda$), referenced 300, that comprises:

- a step, referenced 301, of obtaining a bilinear group $(\mathbb{G}, \mathbb{G}_T)$ of prime order $p > 2^\lambda$, with a generator $g$ randomly chosen in the group $\mathbb{G}$ ;
- a step, referenced 302, of generating a Groth-Sahai CRS $f = (\vec{f_1}, \vec{f_2}, \vec{f_3})$ for the perfect witness indistinguishability setting, namely $\vec{f_1} = (f_1, 1, g)$, $\vec{f_2} = (1, f_2, g)$ and $\vec{f_3} = \vec{f_1}^{\xi 1} \cdot \vec{f_2}^{\xi 2} \cdot (1,1,g)^{-1}$, with randomly chosen elements $f_1$ and $f_2$ in the group G, and values $\xi 1$ and $\xi 2$, randomly chosen values in $\mathbb{Z}_p$ ;
- a step, referenced 303, of generating a key pair $(sk_{aho}, pk_{aho})$ for an AHO signature (see the article *"Signing on Elements in Bilinear Groups for Modular Protocol Design"* previously mentioned for a definition of such signature scheme) in order to sign messages consisting of a single group element. The elements of the key pair are the following ones: $pk_{aho} = (G_r, H_r, G_z, H_z, G_1, H_1, A, B)$, with $G_z = G_r^{\gamma z}$, $H_z = H_r^{\delta z}$, $G_1 = G_r^{\gamma_1}$, $H_1 = H_r^{\delta_1}$, and $sk_{aho} = (\alpha_a, \alpha_b, Y_z, \delta_z, \gamma_1, \delta_1)$;
- a step, referenced 304, of generating parameters for a Waters hash function. Such step of generating comprises :

    o a step of obtaining $L + 1$ random values $(h_0, h_1, ..., h_L)$ where each element $h_i$ belongs to the group $\mathbb{G}$ ;

    o a step of defining a function $H_G : \{0,1\}^L \to \mathbb{G}$ , such that for any L-bit string m = $m[1] ... m[L] \in \{0,1\}^L$, we

have $H_{\mathbb{G}}(m) = h_0 . \prod_{i=1}^{L} h_i^{m[i]}$;

- a step, referenced 305, of outputting a public key *pk* which is defined as follows :

$pk = ( (\mathbb{G}, \mathbb{G}_T), g, \mathbf{f}, pk_{aho}, \{h_i\}_{i=0}^{L})$, and outputting a private key *sk* defined as follows : *sk* = $sk_{aho}$ . The public key defines $\sum = \{0,1\}^L$.

Figure 3(b) presents a signature method noted *Sign(sk,Msg)*, referenced 306, that takes on input a message $Msg = \{m_i\}_{i=1}^{n}$ , where $m_i \in \{0,1\}^L$ for each *i*, and the private key *sk* = $sk_{aho}$. Such signature method comprises:

- a step, referenced 307, of generating a fresh one-time public key $X = g^x$, with an element x which is chosen randomly in the group $\mathbb{Z}_p$;

- a step, referenced 308, of generating Groth-Sahai commitments $(1,1,X).\overrightarrow{f_1}^{r_X} . \overrightarrow{f_2}^{s_X} . \overrightarrow{f_3}^{t_X}$ with the elements $r_X$, $s_X$ and $t_X$ that are random values belonging to the group $\mathbb{Z}_p$;

- a step, referenced 309, of generating an AHO signature $(\theta_1, ..., \theta_7) \in \mathbb{G}^7$ on the group element $X \in \mathbb{G}$ ;

- a step, referenced 310 of generating some Groth-Sahai commitments $\vec{C}_{\theta_j} = (1,1,\theta_j).\overrightarrow{f_1}^{r\theta_j}.\overrightarrow{f_2}^{s\theta_j}.\overrightarrow{f_3}^{t\theta_j}$ for $j \in \{1,2,5\}$;

- a step, referenced 311, of generating NIWI proofs $\overrightarrow{\pi}_{aho,1}$ and $\overrightarrow{\pi}_{aho,2}$ that committed variables satisfy the following two relationships:

 A. $e(\theta_3, \theta_4)^{-1} = e(G_z, \theta_1).e(G_r, \theta_2).e(G_1,X)$ and
 B. $e(\theta_6, \theta_7)^{-1} = e(H_z, \theta_1).e(H_r, \theta_5).e(H_1,X)$. In that case, the proofs are obtained as follows:

$$\overrightarrow{\pi}_{aho,1} = (G_z^{-r\theta_1} G_r^{-r\theta_2} G_1^{-r_X}, G_z^{-s\theta_1} G_r^{-s\theta_2} G_1^{-s_X}, G_z^{-t\theta_1} G_r^{-t\theta_2} G_1^{-t_X}) \text{ and}$$

$$\overrightarrow{\pi}_{aho,2} = (H_z^{-r\theta_1} H_r^{-r\theta_5} H_1^{-r_X}, H_z^{-s\theta_1} H_r^{-s\theta_5} H_1^{-s_X}, H_z^{-t\theta_1} H_r^{-t\theta_5} H_1^{-t_X}) ;$$

- a step, referenced 312, of determining n elements of the group , $\mathbb{Z}_p$ ($\omega_1$, ..., $\omega_n$), satisfying the following constraint:

$$\sum_{i=1}^{n} \omega_i = x;$$

- a step, referenced 313, of determining for all the i $\in$ {1, ..., n} the followings values: $\sigma_{i,1} = H_{\mathbb{G}}(m_i)^{\omega_i}$ and where the messages are indexed in some predetermined lexicographical order;

- a step, referenced 314, of determining commitments of said values $\sigma_{i,1}$ and $\sigma_{i,2}$ as follows:

$\vec{C}_{\sigma_{i,1}} = (1,1,\sigma_{i,1}).\overrightarrow{f_1}^{r_{i,1}}.\overrightarrow{f_2}^{s_{i,1}} . \overrightarrow{f_3}^{t_{i,1}}$ and $\vec{C}_{\sigma_{i,2}} = (1,1,\sigma_{i,2}).\overrightarrow{f_1}^{r_{i,2}}.\overrightarrow{f_2}^{s_{i,2}} . \overrightarrow{f_3}^{t_{i,2}}$ , for all the elements $\sigma_{i,1}$ and $\sigma_{i,2}$ that belong to the set $\{\sigma_{i,1}, \sigma_{i,2}\}_{i=1}^{n}$;

- a step, referenced 315, of generating for all $i \in \{1, ..., n\}$ , a NIWI proof $\overrightarrow{\pi_i}$ proving that the elements $\sigma_{i,1}$ and $\sigma_{i,2}$ satisfy the equation $e(\sigma_{i,1}, g) = e(H_{\mathbb{G}}(m_i), \sigma_{i,2})$. Such proof $\overrightarrow{\pi_i}$ is obtained by performing the followings computations : $\overrightarrow{\pi}_i = (\pi_{i,1}, \pi_{i,2}, \pi_{i,3} ) =$

$(g^{r_{i,1}}.H_{\mathbb{G}}(m_i)^{-r_{i,2}}, g^{s_{i,1}}.H_{\mathbb{G}}(m_i)^{-s_{i,2}}, g^{t_{i,1}}.H_{\mathbb{G}}(m_i)^{-t_{i,2}})$, and satisfying the following equation $E(g, \vec{C}_{\sigma_{i,1}}) = E(H_{\mathbb{G}}(m_i),\vec{C}_{\sigma_{i,2}}).E(\pi_{i,1},\overrightarrow{f_1}).E(\pi_{i,2},\overrightarrow{f_2}).E(\pi_{i,3},\overrightarrow{f_3})$.

- a step, referenced 316, of determining a NIWI proof $\overrightarrow{\pi}_{sum}$ that $X = \prod_{i=1}^{n} \sigma_{i,2}$. Such proof is obtained by performing the following computations: $\vec{\pi}_{sum} = \left(\pi_{s,1}, \pi_{s,2}, \pi_{s,3}\right) = \left(g^{r_X - \Sigma_{i=1}^n r_{i,2}}, g^{s_X - \Sigma_{i=1}^n s_{i,2}}, g^{t_X - \Sigma_{i=1}^n t_{i,2}}\right)$ ,

which satisfies the equation $E\left(g, \vec{C}_X . \prod_{i=1}^n \vec{C}_{\sigma_{i,1}}^{-1}\right) = E\left(\pi_{s,1}, \vec{f_1}\right). E\left(\pi_{s,2}, \vec{f_2}\right). E\left(\pi_{s,3}, \vec{f_3}\right);$

- a step, referenced 317, of outputting the signature $\sigma$ associated to the set of message $Msg = \{m_i\}_{i=1}^n$ defined as:

$$\sigma = (\vec{C}_X, \{\vec{C}_{\theta_j}\}_{j \in \{1,2,5\}}, \{\theta_j\}_{j \in \{3,4,6,7\}}, \vec{\pi}_{aho,1}, \vec{\pi}_{aho,2}, \{(m_i, \vec{C}_{\sigma_{i,1}}, \vec{C}_{\sigma_{i,2}}, \vec{\pi}_i)\}_{i=1}^n, \vec{\pi}_{sum}).$$

Figure 3(c) presents a derivation signature method noted SignDerive(*pk, Msg, Msg', σ*), referenced 318, that takes in input a set of messages $Msg = \{m_i\}_{i=1}^n$ comprising n messages, and another set of messages $Msg' = \{m_i\}_{i=1}^n \cup \{m'\}$ for some $m' \in \Sigma$. In the case that the set *Msg'* has not such format, the derivation signature method outputs a symbol $\perp$ that indicates that it is not possible to derive a signature. Such derivation signature method comprises:

- A step, referenced 319, of re-randomizing the commitment $\vec{C}_X$ and the proofs $\vec{\pi}_{aho,1}, \vec{\pi}_{aho,2}$ and $\vec{\pi}_{sum}$, delivering the re-randomized commitment $\vec{C}_X"$, and the proofs $\vec{\pi}_{aho,1}, \vec{\pi}_{aho,2}$ and $\vec{\pi}_{sum}$. It should be noticed that in these commitments and proofs, the underlying values $r_X$, $s_X$ and $t_X$ have been updated;

- A step, referenced 320, of re-randomizing the commitments $\{\vec{C}_{\theta_j}\}_{j \in \{1,2,5\}}$ and $\{\theta_j\}_{j \in \{3,4,6,7\}}$ by choosing $\rho_2, \rho_5, \mu, \vartheta$ and computing the followings elements : $\vec{C}'_{\theta_2} = \vec{C}_{\theta_2} . (1,1,\theta_4^{\rho_2})$ , $\vec{C}'_{\theta_5} = \vec{C}_{\theta_5} . (1,1,\theta_7^{\rho_5})$ , $\theta'_3 = (\theta_3 . G_r^{-\rho_2})^{1/\mu}$ , $\theta'_6 = (\theta_6 . H_r^{-\rho_5})^{1/\vartheta}, \theta'_4 = \theta_4^{\mu}$, and $\theta'_7 = \theta_7^{\vartheta}$. Although the committed values inside $\vec{C}'_{\theta_2}$ and $\vec{C}_{\theta_5}$ have been updated, $\vec{\pi}_{aho,1}, \vec{\pi}_{aho,2}$ are still valid proofs for the new committed values;

- A step, referenced 321, of determining $\{\vec{C}''_{\theta_j}\}_{j \in \{1,2,5\}}$ by re-randomizing the commitments $\vec{C}_{\theta_1}, \{\vec{C}'_{\theta_j}\}_{j \in \{2,5\}}$ and the proofs $\vec{\pi}_{aho,1}, \vec{\pi}_{aho,2}$ again. Such step delivers $\vec{\pi}'_{aho,1}, \vec{\pi}_{aho,2}$ that are the re-randomized proofs;

- A step, referenced 322, of determining n + 1 elements $(\omega'_1, ..., \omega'_{n+1})$, chosen randomly in the group $\mathbb{Z}_p$ with the constraint that $\sum_{i=1}^{n+1} \omega'_i = 0$;

- A step, referenced 323, of determining for all the $i \in \{1, ..., n\}$ the followings values: $\vec{C}'_{\sigma_{i,1}} = (1,1,H_G(m_i)^{\omega'i}).\vec{C}_{\sigma_{i,1}}$ and $\vec{C}'_{\sigma_{i,2}} = (1,1,g^{\omega'i}).\vec{C}_{\sigma_{i,1}}$. It should be noticed that the proof $\vec{\pi}_i = (\pi_{i,1}, \pi_{i,2}, \pi_{i,3})$ still satisfies the equation $E(g, \vec{C}'_{\sigma_{i,1}}) = E(H_G(m_i), \vec{C}'_{\sigma_{i,2}}).E(\pi_{i,1}, \vec{f_1}).E(\pi_{i,2}\vec{f_2}).E(\pi_{i,3}, \vec{f_3})$, because it only depends on the randomness of commitments and not on the committed values;

- A step, referenced 324, of determining $\sigma_{n+1,1}$ and $\sigma_{n+1,2}$ such that $\sigma_{n+1,1} = H_{\mathbb{G}}(m')^{\omega'_{n+1}}$ and $\sigma_{n+1,2} = g^{\omega'n+1};$

- A step, referenced 325, of obtaining random values $r_{n+1,1}, r_{n+1,2}, s_{n+1,1}, s_{n+1,2}, t_{n+1,1}, t_{n+1,2}$ in the group $\mathbb{Z}_p;$

- A step, referenced 326, of determining commitments of $\sigma_{n+1,1}$ and $\sigma_{n+1,2} : \vec{C}_{\sigma_{n+1,1}} = = (1,1,\sigma_{n+1,1}).\vec{f_1}^{r_{n+1,1}}.\vec{f_2}^{s_{n+1,1}}.\vec{f_3}^{t_{n+1,1}}$ and $\vec{C}_{\sigma_{n+1,2}} = (1,1,\sigma_{n+1,2}).\vec{f_1}^{r_{n+1,2}}.\vec{f_2}^{s_{n+1,2}}.\vec{f_3}^{t_{n+1,2}};$

- A step, referenced 327, of determining NIWI proof $\vec{\pi}_{n+1} = \left(\pi_{n+1,1}, \pi_{n+1,2}, \pi_{n+1,3}\right) =$

$(g^{r_{n+1,1}} \cdot H_{\mathbb{G}}(m')^{-r_{n+1,2}}, g^{s_{n+1,1}} \cdot H_{\mathbb{G}}(m')^{-s_{n+1,2}}, g^{t_{n+1,1}} \cdot H_{\mathbb{G}}(m')^{-t_{n+1,2}})$, for certifying that the following

equality stands : $e(\sigma_{n+1,1}, g) = e(H_{\mathbb{G}}(m'), \sigma_{n+1,2})$;

- A step, referenced 328, of updating the proof sum by determining $\vec{\pi}''_{sum} = (\pi''_{s,1}, \pi''_{s,2}, \pi''_{s,3}) = (\pi'_{s,1} \cdot g^{r_{n+1,2}}, \pi'_{s,2} \cdot g^{s_{n+1,2}}, \pi'_{s,2} \cdot g^{t_{n+1,2}})$;

- A step, referenced 329, of re-randomizing $\left\{\vec{C}'_{\sigma_{i,1}}, \overrightarrow{C'}_{\sigma_{i,2}}\right\}_{i=1}^{n+1}$ and and $\{\vec{\pi}_i\}_{i=1}^{n+1}, \vec{\pi}_{sum}$ delivering

$\left\{\vec{C}''_{\sigma_{i,1}}, \overrightarrow{C''}_{\sigma_{i,2}}\right\}_{i=1}^{n+1}$ and $\{\vec{\pi}''_i\}_{i=1}^{n+1}, \vec{\pi}''_{sum}$;

- A step, referenced 330, of outputting a derived signature $\sigma'$ defined as follows:

$$\sigma' = $$

$$(\vec{C}''_X, \left\{\vec{C}''_{\theta_j}\right\}_{j \in \{1,2,5\}}, \{\theta_j\}_{j \in \{3,4,6,7\}}, \vec{\pi}''_{aho,1}, \vec{\pi}''_{aho,2}, \left\{(m_i, \vec{C}''_{\sigma_{i,1}}, \vec{C}''_{\sigma_{i,2}}, \vec{\pi}''_i)\right\}_{i=1}^{n+1}, \vec{\pi}'''_{sum})$$

after having re-organized the indexation of $\left\{(m_i, \vec{C}''_{\sigma_{i,1}}, \vec{C}''_{\sigma_{i,2}}, \vec{\pi}''_i)\right\}_{i=1}^{n+1}$ according to the pre-determined lex-

icographical order for $\{m_i\}_{i=1}^{n+1}$.

Figure 3(d) presents a verification signature method noted Verify(*pk, Msg, σ*), referenced 331, that takes in input a given public key *pk*, and a set of messages $Msg = \{m_i\}_{i=1}^{n}$, with $m_i \in \Sigma = \{0,1\}^L$, and a signature *σ*. Such verification signature method comprises:

- A step, referenced 332, of verify the format of the signature *σ* (e.g if *σ* can be expressed as follows :

$$\sigma = (\vec{C}_X, \left\{\vec{C}_{\theta_j}\right\}_{j \in \{1,2,5\}}, \{\theta_j\}_{j \in \{3,4,6,7\}}, \vec{\pi}_{aho,1}, \vec{\pi}_{aho,2}, \left\{(m_i, \vec{C}_{\sigma_{i,1}}, \vec{C}_{\sigma_{i,2}}, \vec{\pi}_i)\right\}_{i=1}^{n}, \vec{\pi}_{sum});$$

- A step, referenced 333, of verifying if the proofs $\vec{\pi}_{aho,1} = (\pi_1, \pi_2, \pi_3)$ and $\vec{\pi}_{aho,2} = (\pi4, \pi5, \pi6)$ comprised in the signature *σ* satisfy the following two equations:

$(1_{\mathbb{G}_T}, 1_{\mathbb{G}_T}, A) \cdot E(\theta_3, (1,1,\theta_4))^{-1} = E(G_z, \vec{C}_{\theta_1}) \cdot E(G_r, \vec{C}_{\theta_2}) \cdot E(G_1, \vec{C}_X) \cdot \prod_{j=1}^{3} E(\pi_j, \vec{f}_j)$ and

$(1_{\mathbb{G}_T}, 1_{\mathbb{G}_T}, B) \cdot E(\theta_6, (1,1,\theta_7))^{-1} = E(H_z, \vec{C}_{\theta_1}) \cdot E(H_r, \vec{C}_{\theta_5}) \cdot E(H_1, \vec{C}_X) \cdot \prod_{j=1}^{3} E(\pi_{j+3}, \vec{f}_j)$ In the case that the proofs $\vec{\pi}_{aho,1}, \vec{\pi}_{aho,2}$ do not satisfy such equations, the step delivers an output value equals to zero;

- A step, referenced 334, of determining if there is at least one element $i \in \{1, ..., n\}$ such that the proof $\vec{\pi}_i$ does not verify the equation $E(g, \vec{C}_{\sigma_{i,1}}) = E(H_{\mathbb{G}}(m_i), \vec{C}_{\sigma_{i,2}}) \cdot E(\pi_{i,1}, \vec{f_1}) \cdot E(\pi_{i,2}, \vec{f_2}) \cdot E(\pi_{i,3}, \vec{f_3})$. In the case that such element i exists, the step delivers an output value equals to zero;

- A step, referenced 335, of determining if the element $\vec{\pi}_{sum}$ does not satisfy the equation $E\left(g, \vec{C}_X \cdot \prod_{i=1}^{n} \vec{C}_{\sigma_{i,1}}^{-1}\right) = E(\pi_{s,1}, \vec{f_1}) \cdot E(\pi_{s,2}, \vec{f_2}) \cdot E(\pi_{s,3}, \vec{f_3})$. In the case that such element $\vec{\pi}_{sum}$ does not satisfy the equation, the step delivers an output value equals to zero;

- In the case that one of the previously step has delivered an output value equals to zero, the verification signature method indicates that the signature is not valid. Otherwise, it indicates that the signature is valid.

In the construction, a set of messages $Msg = \{m_i\}_{i=1}^{n}$ having a cardinality *n* can be signed using 9*n* + 25 group elements. The messages are included in the signature so as to simplify the verifier's task and help him determine the signature components associated with each element of *Msg* when checking the equality

$$E\left(g, \vec{C}_{\sigma_{i,1}}\right) = E\left(H_{\mathbb{G}}(m_i), \vec{C}_{\sigma_{i,2}}\right).E\left(\pi_{i,1}, \overrightarrow{f_1}\right).E\left(\pi_{i,2}, \overrightarrow{f_2}\right).E\left(\pi_{i,3}, \overrightarrow{f_3}\right).$$

In comparison with the technique described in the previously mentioned article *"Cryptographic Methods for Storing Ballots on a Voting Machine"* by J. Bethencourt et al., such scheme only inflates signatures by a constant factor.

Moreover, such scheme is clearly unconditionally completely context-hiding (and thus subliminal free) because, except $\{m_i\}_{i=1}^{n}$ (which are re-ordered to appear in lexicographical order at each derivation), signatures only consist of perfectly hiding commitments and NIWI proofs. Moreover, these are perfectly re-randomizable at each signature derivation. We also have a mathematical proof that the scheme is unforgeable in the standard model (i.e., without modeling hash functions as oracles) if the DLIN and *q*-SFP assumptions (see the article *"Computing on Authenticated data: New Privacy Definitions and Constructions"* previously mentioned for a definition of the DLIN and *q*-SFP assumptions) both hold in the group $\mathbb{G}$. The scheme is thus validated by an actual proof "in the real world", rather than a heuristic argument like the random oracle model.

Figure 4 presents a device that can be used to perform one or several steps of methods disclosed in the present document.

Such device referenced 400 comprise a computing unit (for example a CPU, for *"Central Processing Unit"),* referenced 401, and one or several memory units (for example a RAM (for *"Random Access Memory"*) block in which intermediate results can be stored temporarily during the execution of instructions a computer program, or a ROM block in which, among other things, computer programs are stored, or an EEPROM (*"Electrically-Erasable Programmable Read-Only Memory"*) block, or a flash block) referenced 402. Computer programs are made of instructions that can be executed by the computing unit. Such device 400 can also comprise a dedicated unit, referenced 403, constituting an input-output interface to allow the device 400 to communicate with other devices. In particular, this dedicated unit 403 can be connected with an antenna (in order to perform communication without contacts), or with serial ports (to carry communications "contact"). Let's remark that the arrows in Figure 4 means that the linked unit can exchange data through buses for example together.

In an alternative embodiment, some or all of the steps of the method previously described, can be implemented in hardware in a programmable FPGA *("Field Programmable Gate Array"*) component or ASIC ("*Application-Specific Integrated Circuit*") component.

In an alternative embodiment, some or all of the steps of the method previously described, can be executed on an electronic device comprising memory units and processing units as the one disclosed in the Figure 4.

## Claims

1. Method for signing a set of binary element comprising n elements, where n is a natural number, by an electronic device, said method being **characterized in that** it comprises:

   - a step of obtaining a one-time key pair comprising a private key corresponding to a random natural number, and a public key corresponding to an element of a group raised to the power of said random integer;
   - a step of signing said public key with a structure-preserving signature method, delivering a first signature ;
   - a step of obtaining a first commitment on said public key, a second commitment on said first signature and a first non-interactive witness proof that said public key and said first signature verify equations of the structure preserving signature;
   - a step of obtaining a decomposition of said private key into a sum of n random integer, each random integer been associated to only one element of said set;
   - a step of signing each element in said set in function of a programmable hash function and a random integer which is associated to it, delivering, for each element in said set, a second signature comprising at least a first and a second elements, a combination of all of said second elements being linked to said public key;
   - a step of obtaining a third commitment on said first element, and a fourth commitment on said second element, for each second signature;
- a step of obtaining a second non-interactive witness proof that a relationship exists between said first element and said second element;
- a step of obtaining a third non-interactive witness proof that asserts that said combination of all of said second elements is being linked to said public key holds;
- a step of outputting a signature of said set of binary element comprising said first, second commitments, said first non-interactive witness proof, said third non-interactive witness proof, and for each binary element of said set, said third, fourth commitments and said second non-interactive witness proof.

2. Method for signing according to claim 1, **characterized in that** said first, second, third and fourth commitments are Groth-Sahai commitments.

3. Method for signing according to any claims 1 to 2, **characterized in that** said programmable hash function is a Waters hash function.

4. Method for signing according to any claims 1 to 3, **characterized in that** said random natural number x is comprised between zero and a prime number $p$, and said public key corresponds to $X = g^x$, where $g$ is said element of said group.

5. Method for signing according to claim 4, **characterized in that** said a step of signing each element comprises:

- a step of obtaining said at least first element by determining a value $\sigma_{i,1} = H_{\mathbb{G}}(m_i)^{\omega_i}$, where $H_{\mathbb{G}}$ is said programmable hash function, $m_i$ is an element of said set of binary element, and $\omega_i$ is said random integer associated to said element $m_i$;
- a step of obtaining said at least second element by determining a value $\sigma_{i,2} = g^{\omega_i}$; and **in that** said combination corresponds to a product of all the n values $\sigma_{i,2}$ that is equal to said public key.

6. Method for signing according to claim 5, **characterized in that** said relationship between said first element $\sigma_{i,1}$ and said second element $\sigma_{i,2}$ is the following one:

$$e(\sigma_{i,1}, g) = e(H_{\mathbb{G}}(m_i), \sigma_{i,2}).$$

7. Method for updating, by an electronic device, a signature of a set of binary element comprising $n$ elements, where n is a natural number, **characterized** it comprises:

- a step of verifying that said signature of said set of binary element comprises a first and a second commitment, a first non-interactive witness proof, a third non-interactive witness proof, and for each binary element of said set, a third and a fourth commitments and a second non-interactive witness proof;
- A step of adding $k$ binary elements to said set, where k is a natural number, delivering an updated set of binary elements comprising n + k elements that are different from each other;
- A step of obtaining $n$ + k random integer, each random integer been associated to only one element of said set, and a sum of said $n$ + k random integer being equal to zero ;
- A step of modifying for each binary element of said set, said third and said fourth commitments in function of a random integer associated to a binary element;
- A step of determining for each of the k binary added elements, a first signature comprising at least a first and a second element in function of a programmable hash function and a random integer which is associated to it;
- A step of determining for each first signature a fifth commitment on said at least a first element, a sixth commitment on said at least a second element, and a fourth non-interactive witness proof that a relationship exists between said first element and said second element, said fifth and sixth commitments corresponding to said third and fourth commitments for said $k$ additional elements, and said fourth non-interactive witness proof corresponding to said second non-interactive witness proof for said $k$ additional elements;
- A step of updating said third non-interactive witness proof;
- A step of re-randomizing commitments and proofs.

8. Method for updating according to claim 7, **characterized in that** all commitments are are Groth-Sahai commitments.

9. Method for updating according to any claims 7 to 8, **characterized in that** said programmable hash function is a Waters hash function.

10. A computer-readable and non-transient storage medium storing a computer program comprising a set of computer-executable instructions to implement a method for cryptographic computations when the instructions are executed by a computer, wherein the instructions comprise instructions, which when executed, configure the computer to perform a method for signing of claims 1 to 6, and/or to perform a method for updating a signature of claims 7 to 9.

11. Electronic device comprising means for signing a set of binary element comprising n elements, where n is a natural number, said means for signing being **characterized in that** they comprise:

    - means for obtaining a one-time key pair comprising a private key corresponding to a random natural number, and a public key corresponding to an element of a group raised to the power of said random integer;
    - means for signing said public key with a structure-preserving signature means, delivering a first signature ;
    - means for obtaining a first commitment on said public key, a second commitment on said first signature and a first non-interactive witness proof that said public key and said first signature verify equations of the structure preserving signature;
    - means for obtaining a decomposition of said private key into a sum of n random integer, each random integer been associated to only one element of said set;
    - means for signing each element in said set in function of a programmable hash function and a random integer which is associated to it, delivering, for each element in said set, a second signature comprising at least a first and a second elements, a combination of all of said second elements being linked to said public key;
    - means for obtaining a third commitment on said first element, and a fourth commitment on said second element, for each second signature;
    - means for obtaining a second non-interactive witness proof that a relationship exists between said first element and said second element;
    - means for obtaining a third non-interactive witness proof that asserts that said combination of all of said second elements is being linked to said public key holds;
    - means for outputting a signature of said set of binary element comprising said first, second commitments, said first non-interactive witness proof, said third non-interactive witness proof, and for each binary element of said set, said third, fourth commitments and said second non-interactive witness proof.

12. Electronic device according to claim 11, **characterized in that** said first, second, third and fourth commitments are Groth-Sahai commitments.

13. Electronic device according to any claims 11 to 12, **characterized in that** said programmable hash function is a Waters hash function.

14. Electronic device comprising means for updating a signature of a set of binary element comprising n elements, where n is a natural number, said means for updating being **characterized in that** they comprise:

    - means for verifying that said signature of said set of binary element comprises a first and a second commitment, a first non-interactive witness proof, a third non-interactive witness proof, and for each binary element of said set, a third and a fourth commitments and a second non-interactive witness proof;
    - means for adding $k$ binary elements to said set, where k is a natural number, delivering an updated set of binary elements comprising n + k elements that are different from each other;
    - means for obtaining $n + k$ random integer, each random integer been associated to only one element of said set, and a sum of said $n + k$ random integer being equal to zero ;
    - means for modifying for each binary element of said set, said third and said fourth commitments in function of a random integer associated to a binary element;
    - means for determining for each of the k binary added elements, a first signature comprising at least a first and a second element in function of a programmable hash function and a random integer which is associated to it;
    - means for determining for each first signature a fifth commitment on said at least a first element, a sixth commitment on said at least a second element, and a fourth non-interactive witness proof that a relationship exists between said first element and said second element, said fifth and sixth commitments corresponding to said third and fourth commitments for said $k$ additional elements, and said fourth non-interactive witness proof corresponding to said second non-interactive witness proof for said $k$ additional elements;
    - means for updating said third non-interactive witness proof;

- means for re-randomizing commitments and proofs.

**15.** Electronic device according to claim 14, **characterized in that** all commitments are are Groth-Sahai commitments.

$m_i$

101

104

102    103

# FIG.1

$\lambda$

| obtaining a Bilinear group ($\mathbb{G}$, $\mathbb{G}_T$) and a generator g | 201 |

| generating Groth-Sahai common reference strings (CRS) | 202 |

200

| generating a key pair ($sk_{sps}$, $pk_{sps}$) for a structure preserving signature scheme | 203 |

| generating parameters for a Waters Hash Function | 204 |

| outputting public key pk and secret key sk | 205 |

pk    sk

# FIG.2a

Msg          sk

generating $x$, $X = g^x$ ⎫ 207

generating commitment $\vec{C}_x$ ⎫ 208

generating SPS : $(\theta_1,...,\theta_{l_{sps}})$ ⎫ 209

generating commitments $\vec{C}_{\theta_j}$, $j \in [\![1, l_{sps}]\!]$ ⎫ 210

206 ∿

generating NIWI proofs ⎫ 211

determining $(\omega_1,...,\omega_n) \in \mathbb{Z}_p^n$ such that $\sum\limits_{i=1}^{n} \omega_i = x$ ⎫ 212

determining $\sigma_{i,1} = H_{\mathbb{G}}(m_i)^{\omega_i}$ and $\sigma_{i,2} = g^{\omega_i}$ for $i \in [\![1;n]\!]$ ⎫ 213

determining commitments $\vec{C}_{\sigma_{i,1}}$ and $\vec{C}_{\sigma_{i,2}}$ for $i \in [\![1;n]\!]$ ⎫ 214

determining a NIWI proof $\vec{\pi}_i$ for $i \in [\![1;n]\!]$ ⎫ 215

determining a NIWI proof $\vec{\pi}_{sum}$ that $X = \prod\limits_{i=1}^{n} \sigma_{i,2}$ ⎫ 216

outputting signature ⎫ 217

FIG.2b

pk    Msg    Msg'    σ

determining n+1 elements $(\omega'_1,...,\omega'_{n+1})$ such that $\sum_{i=1}^{n+1} \omega'_i = 0$    219

determining from $\vec{C}_{\sigma_{i,1}}$ and $\vec{C}_{\sigma_{i,2}}$ comprised in $\sigma$ commitments $\vec{C'}_{\sigma_{i,1}}$ and $\vec{C'}_{\sigma_{i,2}}$ for $i \in [\![1;n]\!]$    220

determining $\sigma_{n+1,1}$ and $\sigma_{n+1,2}$    221

218

obtaining 6 random values    222

Determining commitments for $\sigma_{n+1,1}$ and $\sigma_{n+1,2}$ from said 6 random values    223

determining a NIWI proof $\vec{\pi}_{n+1}$    224

updating the proof sum    225

Re-randomizing commitments and proofs    226

Outputting derived signature $\sigma'$    227

## FIG.2c

pk        Msg        σ (or σ')

229

verifying the format of signature σ

230

NO

verifying that proofs comprised in σ
satisfy verification equations of the
structure preserving signature

228

0

YES

NO

verifying that all $\pi_i$ verify an equation

231

0

YES

NO

verifying that all $\pi_{sum}$ verifies an equation

232

0

YES

1

# FIG.2d

λ

300

301

302

303

304

305

pk    sk

FIG.3a

Msg    sk

307

308

309

310

311

312

313

314

315

316

317

σ

FIG.3b

306

EP 2 860 904 A1

pk    Msg    Msg'    σ

| | 319
| | 320
| | 321

318

| | 322
| | 323
| | 324
| | 325
| | 326
| | 327
| | 328
| | 329
| | 330

σ'

FIG.3c

pk    Msg    σ

| | 332

331

| | 333
| | 334
| | 335

1 or 0

FIG.3d

400

4  0  1        4  0  2

403

FIG.4

| | Europäisches Patentamt<br>European Patent Office<br>Office européen des brevets | **EUROPEAN SEARCH REPORT** | Application Number<br>EP 13 30 6390 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NUTTAPONG ATTRAPADUNG ET AL: "Efficient Completely Context-Hiding Quotable and Linearly Homomorphic Signatures", 26 February 2013 (2013-02-26), PUBLIC-KEY CRYPTOGRAPHY PKC 2013, SPRINGER BERLIN HEIDELBERG, BERLIN, HEIDELBERG, PAGE(S) 386 - 404, XP047022603, ISBN: 978-3-642-36361-0<br>* abstract *<br>* page 387, line 13 - line 31 *<br>* page 388, line 15 - line 23 *<br>* page 389, line 17 - last line *<br>* Sections 2.3 and 2.4; chapter 3 *<br>* Chapter 4 *<br>----- | 1-15 | INV.<br>H04L9/00<br>H04L9/32 |
| A,D | BRENT R WATERS: "Efficient Identity-Based Encryption Without Random Oracles", INTERNATIONAL ASSOCIATION FOR CRYPTOLOGIC RESEARCH,, vol. 20101211:184526, 11 December 2010 (2010-12-11), pages 1-13, XP061001122, [retrieved on 2010-12-11]<br>* Page 3, last 3 lines *<br>* Section 7.1, first 5 lines *<br>-----<br>-/-- | 1-15 | |
| | | | TECHNICAL FIELDS SEARCHED (IPC)<br>H04L |

The present search report has been drawn up for all claims

| Place of search | Date of completion of the search | Examiner |
|---|---|---|
| Munich | 27 February 2014 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 6390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JOHN BETHENCOURT ET AL: "Cryptographic Methods for Storing Ballots on a Voting Machine", PROCEEDINGS OF THE 14TH ANNUAL NETWORK & DISTRIBUTED SYSTEM SECURITY CONFERENCE (NDSS 2007), , 28 February 2007 (2007-02-28), pages 1-14, XP007922557, Retrieved from the Internet: URL:http://crypto.stanford.edu/~dabo/pubs/papers/votestore.pdf [retrieved on 2014-02-24] * abstract * | 1-15 | |
| A,D | NUTTAPONG ATTRAPADUNG ET AL: "Computing on Authenticated Data: New Privacy Definitions and Constructions", 2 December 2012 (2012-12-02), ADVANCES IN CRYPTOLOGY ASIACRYPT 2012, SPRINGER BERLIN HEIDELBERG, BERLIN, HEIDELBERG, PAGE(S) 367 - 385, XP047011248, ISBN: 978-3-642-34960-7 * abstract * * Chapter 5 * | 1-15 | |

TECHNICAL FIELDS
SEARCHED     (IPC)

The present search report has been drawn up for all claims

| Place of search | Date of completion of the search | Examiner |
|---|---|---|
| Munich | 27 February 2014 | Wolters, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ABE ; G. FUCHSBAUER ; J. GROTH ; K. HARALAMBIEV ; M. OHKUBO.** Structure-Preserving Signatures and Commitments to Group elements. *proceedings of Crypto 2010,* 2010, 209-236
- **S. CHATTERJEE et al.** Trading Time for Space: Towards an Efficient IBE Scheme with Short(er) Public Parameters in the Standard Model''. *proceedings of the conference ICISC,* 2005
- **D. NACCACHE.** Secure and Practical Identity-Based Encryption. *Cryptology ePrint Archive Report 2005/369,* 2005
- **D. HOFHEINZ et al.** Short Signatures from Weaker Assumption. *proceedings of the conference Asiacrypt,* 2011
- **M. ABE et al.** Signing on Elements in Bilinear Groups for Modular Protocol Design. *Cryptology ePrint Archive*
- **M. ABE et al.** Structure-Preserving Signatures and Commitments to Group Elements. *proceedings of the conference Crypto,* 2010
- **A. SHAMIR.** How to Share a Secret. *Communications of the ACM,* 1979, vol. 22 (11), 612-613
- **V. GOYAL et al.** Attribute-Based Encryption for Fine-Grained Access Control of Encrypted Data. *Cryptology ePrint Archive,* 2006
- **J. BETHENCOURT.** *Cryptographic Methods for Storing Ballots on a Voting Machine*